# EUROPÄISCHE PATENTSCHRIFT

(11) **EP 2 102 025 B1**
(45) Veröffentlichungstag und Bekanntmachung des Hinweises auf die Patenterteilung: **05.05.2010**
(21) Anmeldenummer: 05850182.6
(22) Anmeldetag: 19.12.2005
(51) Int. Cl.: B60J 7/14

(54) **FAHRZEUG MIT EINEM UMWANDELBAREN DACH**
CONVERTIBLE ROOF MOTOR VEHICLE
VEHICULE A TOIT CONVERTIBLE

(30) Priorität: 31.01.2005 DE 102005004531
(43) Veröffentlichungstag der Anmeldung: 23.09.2009
(73) Patentinhaber: Webasto AG, 82131 Stockdorf (DE)
(72) Erfinder: LANGGUTH, Martin, 82152 Krailling (DE)
(86) Internationale Anmeldenummer: PCT/DE2005/002291
(87) Internationale Veröffentlichungsnummer: WO 2006/079303

(56) Entgegenhaltungen:
- WO-A-03/091054
- DE-A1- 10 304 933
- DE-C1- 19 964 029
- US-A- 5 769 483
- US-A1- 2002 175 536

## Beschreibung

Die Erfindung betrifft ein Fahrzeug mit einem umwandelbaren Dach, das ein vorderes Dachteil und ein hinteres Dachteil aufweist, die zwischen einer den Fahrzeuginnenraum überdeckenden Schließstellung und einer den Fahrzeuginnenraum freigebenden rückwärtigen Ablagestellung verstellbar sind.

Ein derartiges Fahrzeug ist beispielsweise ein Cabriolet mit einem verstellbaren Hardtopdach.

Aus der US 4,950,022 ist ein derartiges Fahrzeug mit einem ein vorderes und ein hinteres Dachteil aufweisenden umwandelbaren Dach bekannt geworden. Das hintere Dachteil ist um eine karosseriefeste Schwenkachse, die durch an B-Säulen oberhalb einer Fahrzeuggürtellinie angeordneten Lagern bestimmt ist, in eine rückwärtige Ablagestellung auf einen Kofferraumdeckel umschwenkbar. Das vordere Dachteil ist am Vorderrand des hinteren Dachteils schwenkbar gelagert und wird auf die nach oben weisende Innenseite des hinteren Dachteils geschwenkt, wenn dieses in der rückwärtigen Ablagestellung angeordnet ist.

Aus der DE 199 64 029 C1 ist ein Fahrzeug mit einem umwandelbaren Dach bekannt geworden, bei dem ein vorderes Dachteil mittels einer Hebeleinrichtung in Form eines Viergelenks an den Seitenwänden der Karosserie unterhalb der Gürtellinie des Fahrzeugs bewegbar gelagert ist und in einem rückwärtigen Ablageraum ablegbar ist. Ein hinteres Dachteil, das eine Heckscheibe enthält und mit seinem Unterrand bei geschlossenem Dach auf dem Verdeckkastendeckel aufliegt, ist mittels einer Hebeleinrichtung am vorderen Dachteil und/oder an der das vordere Dachteil lagernden Hebeleinrichtung schwenkbar gelagert, so daß es beim Ablegen des Daches zunächst nach vorne über das vordere Dachteil und nach Öffnen des Verdeckkastendeckels gemeinsam mit dem vorderen Dachteil in den rückwärtigen Ablageraum eingeschwenkt wird. Im Ablageraum sind beide Dachteile übereinander liegend und mit ihren Oberseiten nach oben weisend angeordnet.

Der Erfindung liegt die Aufgabe zugrunde, ein eingangs genanntes Fahrzeug zu schaffen, dessen bewegbare Dachteile bei in einfacher Weise gestalteter Lagerung und in einfach ausführbarem Bewegungsablauf zwischen der Schließstellung und der Offenstellung des Daches zu verstellen sind.

Die Aufgabe wird bei dem oben genannten Fahrzeug erfindungsgemäß dadurch gelöst, daß das vordere Dachteil derart an einem karosseriefesten Hauptlager schwenkbar gelagert ist, daß es um eine am Hauptlager feststehende Schwenkachse in seine Ablagestellung nach hinten umschwenkt, und daß das hintere Dachteil mittels einer Lagereinrichtung am vorderen Dachteil zwischen einer Schließstellung bei geschlossenem Dach und einer Offenstellung, in der es über dem vorderen Dachteil in gleichbombierter Stellung angeordnet ist, verstellbar gelagert ist und in Offenstellung beim Verschwenken des vorderen Dachteils gemeinsam mit diesem in die rückwärtige Ablagestellung umschwenkbar ist.

Für die reine Schwenkbewegung des vorderen Dachteils ist lediglich eine einfach gestaltete Lagereinrichtung mit einer karosserieseitig festliegenden Schwenkachse erforderlich. Da das hintere Dachteil am vorderen Dachteil gelagert ist, kann es ohne eigenständigen Schwenkantrieb mit dem vorderen Dachteil nach hinten in den Ablageraum umgeschwenkt werden, in dem die beiden Dachteile mit ihrer Oberseite nach unten weisend abgelegt sind.

Durch die einfach gestaltbare Lagerung des hinteren Dachteils am vorderen Dachteil entfällt eine aufwendigere Lagerung an der Karosserie. Das Dach ist damit robust gelagert und enthält keine Lenkerbauteile im Kopfbereich der Fahrzeuginsassen. Jedes Dachteil kann unmittelbar an der Karosserie verriegelt werden, wodurch die Festigkeit des geschlossenen Daches erhöht wird. Wenn nur das hintere Dachteil geöffnet und über das vordere Dachteil bewegt wird, kann die dadurch freigelegte Dachöffnung zur Belüftung des Fahrzeuginnenraums sowohl im Stand wie auch in Fahrbetrieb dienen.

Vorteilhafte Ausgestaltungen der Erfindung sind in den Unteransprüchen angegeben.

Vorzugsweise ist die Lagereinrichtung des hinteren Dachteils als Lenkereinrichtung und insbesondere als ein Vier- oder Mehrgelenk gebildet. Die Lagereinrichtung enthält in üblicher Weise zwei seitlich voneinander beabstandete Lenkereinrichtungen, kann aber auch mit nur einer zentral angeordneten Lenkereinrichtung gebildet sein. In einer bevorzugten Gestaltung ist das Hauptlager an einem Fahrzeugseitenteil, an einer B-Säule oder an einem Überrollbügel oder dergleichen insbesondere oberhalb der Gürtellinie des Fahrzeugs angeordnet. Damit können die zu bewegenden Teile der Lagereinrichtung kürzer und damit leichter gebildet sein.

Der Schwenkwinkel des vorderen Dachteils liegt im Bereich von etwa 180°, wenn die beiden Dachteile in Schließstellung in etwa horizontal ausgerichtet sind und im Ablageraum in umgeschwenkter Stellung gleichfalls in etwa horizontal angeordnet sind. Bei hiervon abweichender Gestaltung kann selbstverständlich der Schwenkwinkel dementsprechend abweichen.

Vorzugsweise enthält das vordere Dachteil zwei sich nach hinten zum jeweiligen Hauptlager erstreckende seitliche Verlängerungen oder Lagerarme und das hintere Dachteil überdeckt in Schließstellung die Verlängerungen oder Lagerarme und in Abhängigkeit der Gestalt der Dachhaut des vorderen Dachteils auch einen hinteren dachhautfreien Abschnitt des vorderen Dachteils. Wenn das hintere Dachteil über das vordere Dachteil geschwenkt ist, ist damit die seitliche Abdeckung der Verlängerungen oder Lagerarme des vorderen Dachteils entfernt. Damit kann vermieden werden, daß die seitlichen Fahrzeugstrukturen im Bereich des Hauptlagers ein Hindernis für den Schwenkweg des vorderen Dachteils darstellen.

Die Lager- oder Stützarme des vorderen Dachteils können an diesem fest angebracht sein oder sie sind als integral geformte Verlängerungen oder Lagerabschnitte gebildet.

Vorzugsweise ist eine Antriebseinrichtung zum Verschwenken des vorderen Dachteils vorgesehen und das hintere Dachteil ist mit dieser Antriebseinrichtung gekoppelt oder es enthält eine eigene Antriebseinrichtung. Die Antriebseinrichtung zum Verstellen des vorderen Dachteils kann z. B. einen Hydraulikzylinder oder einen Elektromotor aufweisen. Der Hydraulikzylinder bzw. der Elektromotor kann unmittelbar oder über ein Zwischengetriebe mit der Lagereinrichtung des vorderen Dachteils verbunden sein.

Die beiden Dachteile enthalten bevorzugt feste Dachschalen. Sie können jedoch auch rahmenartig gebildet sein und eine Bespannung in der Art eines Softtops aufweisen. Mischformen sind auch denkbar.

Bei einem Fahrzeug, wie z. B. einem Mittelmotor- oder Heckmotorfahrzeug, mit diesem Dach ist es zweckmäßig, wenn ein Deckel des Ablageraums im Bereich seines Hinterrandes am Fahrzeug schwenkbar gelagert ist und vor dem Verschwenken der Dachteile mit seinem Vorderrand in eine Öffnungsstellung hochschwenkbar ist.

Wenn der Deckel des Ablageraums seitlich jeweils eine nach oben ragende Finne aufweist, die einen nach unten offenen Aufnahmeraum für einen Seitenabschnitt des vorderen Dachteils bildet, können die beiden Dachteile in einem Ablageraum mit vergleichsweise geringer Tiefe nahe der Fahrzeugoberseite angeordnet sein, da die nach oben ragenden Seitenrandabschnitte des oben liegenden vorderen Dachteils in diesen Aufnahmeräumen Platz finden.

Wenn das Fahrzeug eine insbesondere vertikal ausgerichtete Heckscheibe aufweist, die am Fahrzeug angeordnet ist, kann an diese Heckscheibe das hintere Dachteil bei geschlossenem Dach angrenzen. Wenn zumindest das hintere Dachteil geöffnet ist und damit die von ihm zu verschließende Dachöffnung freigelegt ist, dient die Heckscheibe als Windschott.

Wenn die Heckscheibe am Fahrzeug verstellbar und insbesondere vertikal absenkbar oder verschwenkbar gelagert ist, kann die Lagerung der Dachteile dahingehend ausgelegt werden, daß der Verschwenkweg durch die abgesenkte Heckscheibe freigegeben wird.

Das Dach und das hintere Dachteil können derart gestaltet sein, daß bei geschlossenem Dach das hintere Dachteil an seinem jeweiligen Seitenrand an die seitliche Fahrzeugstruktur angrenzt.

Die Antriebseinrichtung zum Verstellen der beiden Dachteile kann einen Hydraulikzylinder, einen Elektromotor oder auch andere geeignete Antriebe aufweisen. Der Hydraulikzylinder kann über Koppellenker oder über ein rotatorisches Element wie z. B. ein Zahnrad oder ein Zahnsegment mit den Lagereinrichtungen der beiden Dachteile gekoppelt sein.

Nachfolgend wird das Fahrzeug anhand eines Ausführungsbeispiels unter Bezugnahme auf die Zeichnung näher erläutert. Es zeigt:
- Fig. 1: in einer Seitenansicht in schematischer Darstellung ein Fahrzeug mit einem in Schließstellung angeordneten, in einen Ablageraum ablegbaren Hardtop-Dach, das ein vorderes Dachteil und ein hinteres Dachteil enthält;
- Fig. 2: in einer Seitenansicht in schematischer Darstellung das Fahrzeug mit geschlossenem Dach und einem angehobenen Deckel des Ablageraums;

- Fig. 3: in einer Seitenansicht in schematischer Darstellung das Fahrzeug mit angehobenem Deckel, wobei das hintere Dachteil über das vordere Dachteil verschwenkt ist;
- Fig. 4: in einer Seitenansicht in schematischer Darstellung das Fahrzeug mit angehobenem Deckel, wobei das vordere Dachteil gemeinsam mit dem hinteren Dachteil in einer Zwischenstellung beim Verschwenken in den Ablageraum dargestellt ist;
- Fig. 5: in einer Seitenansicht in schematischer Darstellung das Fahrzeug mit angehobenem Deckel und in den Ablageraum verschwenkten Dachteilen;
- Fig. 6: in einer Seitenansicht in schematischer Darstellung das Fahrzeug mit in den Ablageraum verschwenkten Dachteilen und wieder abgesenktem Deckel; und
- Fig. 7: in einer Querschnittansicht in schematischer Darstellung den geschlossenen Deckel des Ablageraums mit den im Ablageraum angeordneten Dachteilen.

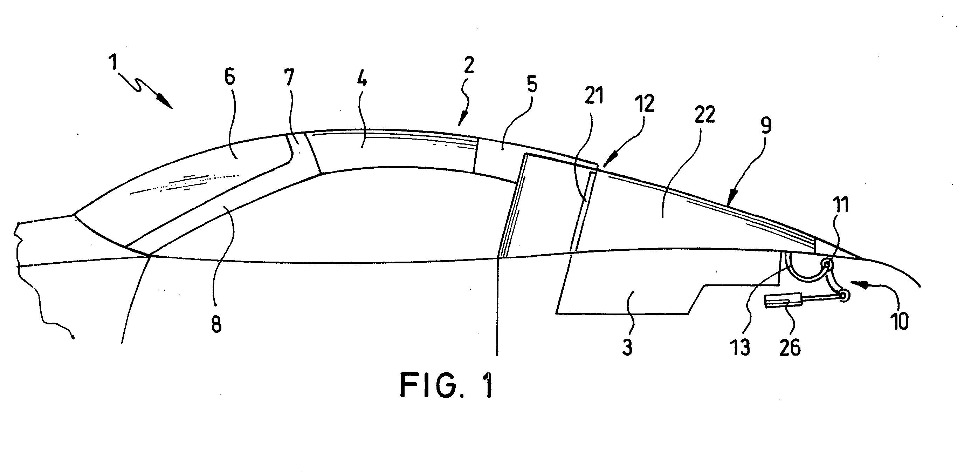

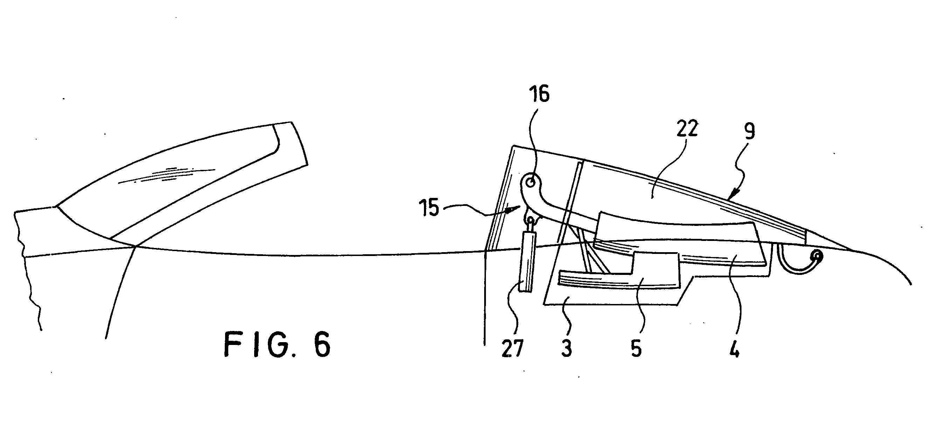

Ein Cabriolet-Fahrzeug 1 enthält (siehe Fig. 1) ein umwandelbares Dach 2, das zwischen einer den Fahrzeuginnenraum überdeckenden Schließstellung (Fig. 1) und einer Offenstellung (Fig. 6), in der es in einem heckseitigen Verdeckkasten oder Ablageraum 3 abgelegt ist, verstellbar ist. Das Dach 2 ist gemäß dem dargestellten Ausführungsbeispiel ein bewegbares Hardtop mit einem vorderen Dachteil 4 und einem hinteren Dachteil 5, die als starre Dachschalen gebildet sind und in Schließstellung hintereinander liegend aneinander angrenzen. Grundsätzlich kann das Dach 2 auch ein Softtopdach sein, bei dem das vordere und das hintere Dachteil eine einen Verdeckstoff tragende Rahmenstruktur aufweisen, oder das Dach ist eine Mischform aus Hardtopdach und Softtopdach.

In Schließstellung des Daches 2 ist das vordere Dachteil 4 an einem oberhalb der Windschutzscheibe 6 angeordneten Windlauf 7 angelegt und an diesem oder an seitlichen A-Säulen 8 verriegelt gehalten. An das hintere Dachteil 5 schließt sich ein Deckel 9 des Ablageraums 3 an, der mittels einer Lagereinrichtung 10 um eine hintere Schwenkachse 11 schwenkbar gelagert ist und mit seinem Vorderrand 12 zum Freigeben einer Durchtrittsöffnung für das Dach 2 um diese Schwenkachse 11 hochgeschwenkt wird, so daß das Dach 2 in den Ablageraum 3 eingeschwenkt bzw. aus ihm ausgeschwenkt werden kann. Die Schwenkachse 11 kann an der Karosserie festgelegt sein und die Lagereinrichtung 10 enthält z. B. beidseits jeweils einen Lagerhebel 13 (siehe Darstellung in den Figuren) oder ein Scharnier oder sie ist z. B. durch ein Vier- oder Mehrgelenk gebildet und die Schwenkachse 11 verlagert sich beim Verschwenken des Deckels 9 relativ zur Karosserie.

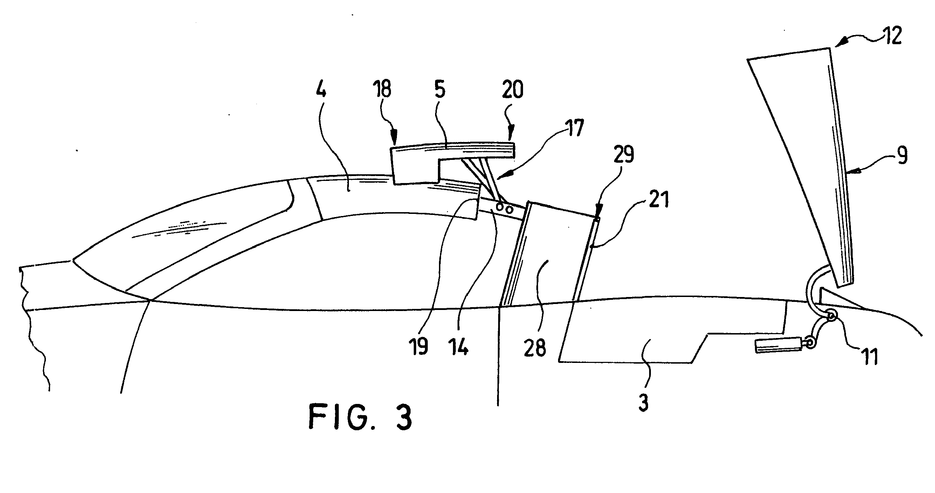

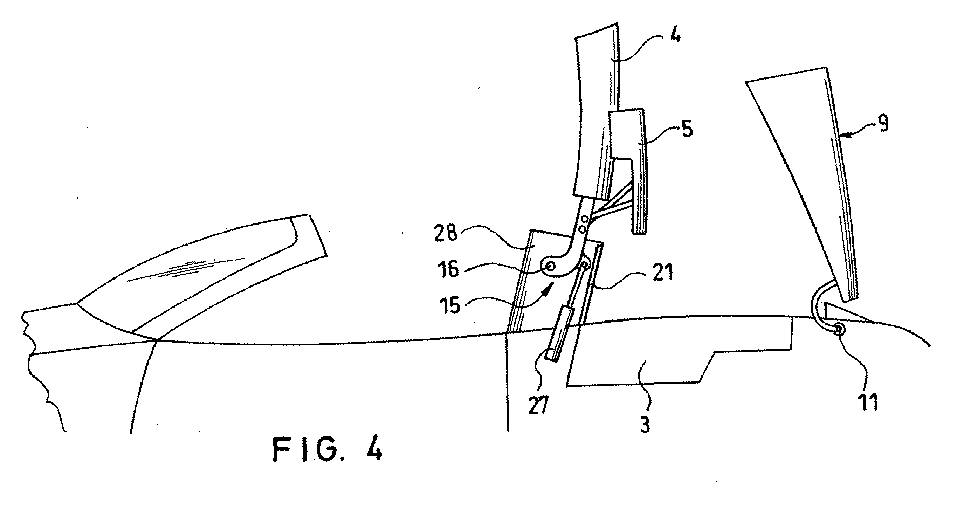

Das vordere Dachteil 4 ist mittels jeweils einer seitlichen nach hinten ragende Verlängerung oder eines seitlichen Lagerarms 14 (siehe Fig. 3 und 4), der am vorderen Dachteil 4 angebracht ist und sich von diesem nach hinten erstreckt, an einem karosserieseitigen Hauptlager 15 um eine bezüglich des Fahrzeugs in Querrichtung horizontal verlaufende Schwenkachse 16 schwenkbar gelagert. Die Schwenkachse 16 ist bevorzugt unterhalb des hinteren Dachteils 5 (bezogen auf dessen Schließstellung) und insbesondere etwa mittig unter dem hinteren Dachteil 5 angeordnet. Das Hauptlager 15 ist an einer festen seitlichen Fahrzeugstruktur 28 angeordnet, die bei einem zweisitzigen Fahrzeug seitlich neben oder hinter den Sitzen angeordnet ist und etwa bis in Höhe der Kopfstützen reicht oder auch einen Überrollbügel bilden kann.

Das hintere Dachteil 5 ist am vorderen Dachteil 4 mittels einer Lagereinrichtung 17 schwenkbar gelagert, so daß es aus seiner Schließstellung (siehe Fig. 1), in der es mit seinem Vorderrand 18 an den Hinterrand 19 der Dachschale des vorderen Dachteils 4 anschließt und mit seinem Hinterrand 20 an eine Heckscheibe 21 angrenzt, die zwischen den beiden seitlichen festen Fahrzeugstrukturen 28 in im wesentlichen senkrechter Ausrichtung angeordnet ist, in eine Offenstellung (Fig. 3) nach vorne über das vordere Dachteil 4 bewegbar ist.

Die Lagereinrichtung 17 enthält beidseits jeweils z. B. eine Vier- oder Mehrgelenkmechanik (in den Figuren ist nur die an der linken Fahrzeugseite gelegene Viergelenkmechanik schematisch dargestellt), die am vorderen Dachteil 4 und insbesondere an dem Lagerarm 14 des vorderen Dachteils 4 schwenkbar gelagert ist.

Die Heckscheibe 21 kann am Fahrzeug fest angebracht sein oder mittels einer Führungseinrichtung bewegbar und insbesondere zwischen ihrer dargestellten angehobenen Schließstellung und einer unteren abgesenkten Ablagestellung vertikal verschiebbar oder schwenkbar gelagert sein.

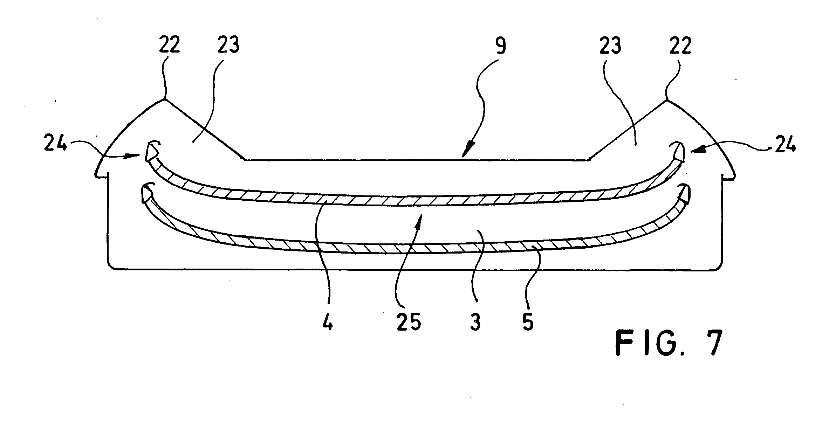

Der Deckel 9 des Ablageraums 3 weist zwei seitliche sich längs erstreckende und nach oben ragende Finnen 22 auf (siehe auch Fig. 7), die sowohl bei geschlossenem wie auch bei geöffnetem abgelegtem Dach 2 jeweils mit ihrem Vorderabschnitt am Vorderrand 12 des Deckels 9 an der zugehörigen seitlichen Fahrzeugstruktur 28 anliegen. Jede Finne 22 bildet einen nach unten offenen Aufnahmeraum 23 (siehe Fig. 7) zum Aufnehmen des jeweiligen Randbereichs 24 des gewölbt gebildeten vorderen Dachteils 4, der bei umgeschwenktem vorderen Dachteil 4 gegenüber dem Mittelabschnitt 25 des Dachteils 4 nach oben vorsteht.

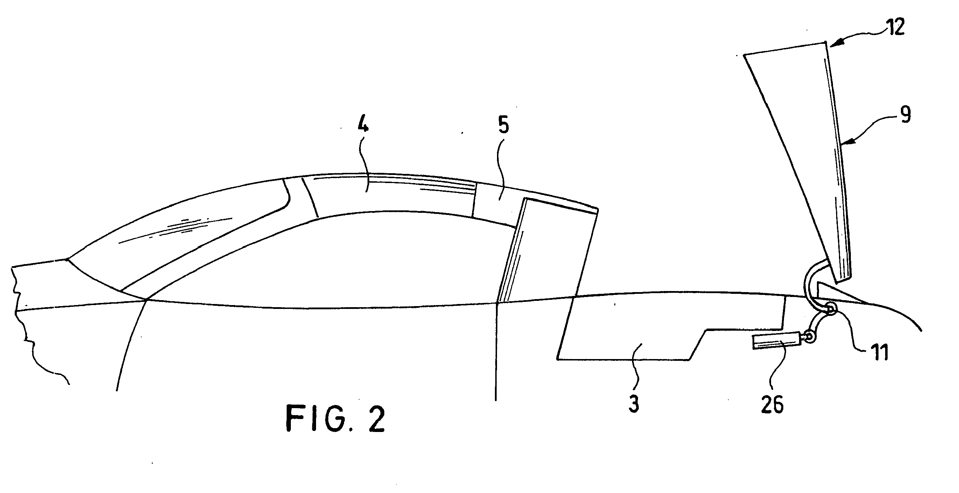

Zum Öffnen des Daches 2 verschwenkt zunächst eine Antriebseinrichtung 26, die z. B. mit dem Lenker 13 des Deckels 9 verbunden ist, den Deckel 9 in eine Offenstellung (siehe Fig. 2). Anschließend oder auch gleichzeitig wird eine Verriegelungseinrichtung, die das hintere Dachteil 5 am Dach in Schließstellung verriegelt hält, entriegelt und das hintere Dachteil 5 wird mittels einer nicht dargestellten Antriebseinrichtung über das vordere Dachteil 4 verschwenkt (Fig. 3) und mittels der Antriebseinrichtung und/oder einer zusätzlichen Halte-, Rast- oder Riegeleinrichtung in dieser Stellung an dem vorderen Dachteil 4 gehalten. Hierbei ist das vordere Dachteil 4 noch in seiner stabilen verriegelten Schließstellung und eine vom hinteren Dachteil 5 freigegebene Dachöffnung kann zur Belüftung des Fahrzeuginnenraums in der Art eines geöffneten Schiebedaches dienen.

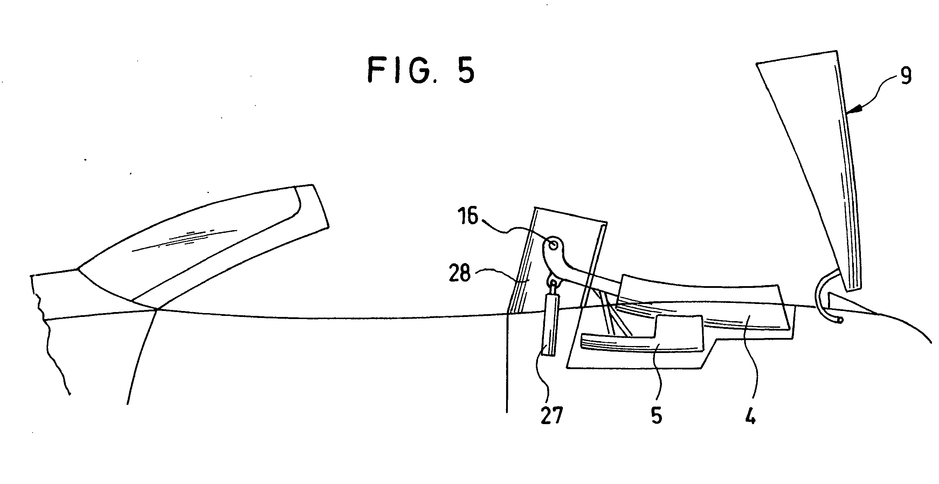

Nach dem Entriegeln des vorderen Dachteils 4 vom Windlauf 7 bzw. den A-Säulen 8 wird das vordere Dachteil 4 mittels einer Antriebseinrichtung 27, beispielsweise jeweils einem an der Karosserie abgestützten und am Lagerarm 14 angreifenden Hydraulikzylinder, um die feste Schwenkachse 16 nach hinten in den Ablageraum 3 eingeschwenkt (über Fig. 4 nach Fig. 5). Dabei bleibt das hintere Dachteil 5 in unveränderter Position relativ zum vorderen Dachteil 4 und schwenkt gemeinsam mit diesem in den Ablageraum 3 ein, in dem es folglich unter dem vorderen Dachteil 4 angeordnet ist (siehe Fig. 7).

Schließlich wird der Deckel 9 wieder in seine Ausgangsstellung herabgeschwenkt (Fig. 6 und 7). Das Fahrzeug ist nun mit geöffnetem, abgelegten Dach 2 nutzbar.

Die Öffnungsbewegung der beiden gekoppelten Dachteile 4 und 5 durch die Antriebseinrichtung 27 erfolgt je nach Ausgestaltung des Daches 2 etwa um eine halbe Umdrehung bzw. etwa 180° Grad. Durch diese einfache Schwenkbewegung liegt dann im Ablageraum 3 das vordere Dachteil 4 in umgeschwenkter Stellung mit seiner Oberseite nach unten weisend über dem hinteren Dachteil 5.

Statt der schematisch dargestellten Anbindung des Hydraulikzylinders 27 an dem Lagerarm 14 (siehe Darstellung in den Fig. 4 bis 6) kann auch ein Zwischengetriebe vorgesehen sein. Des weiteren können auch andere Antriebe z. B. mit Elektromotoren vorgesehen sein.

Statt mit einem eigenen Antrieb kann das hintere Dachteil 5 auch mittels einer Antriebskoppelung mit dem einen Hauptantrieb bildenden Hydraulikzylinder 27 verbunden sein und von diesem betätigt werden.

Die Heckscheibe 21 ist hinter dem an der Fahrzeugstruktur 28 in etwa zwischen dem Hauptlager 15 und dem Ablageraum 3 im wesentlichen in vertikaler Ausrichtung fest angeordnet ist. Das hintere Dachteil 5 ist an seinem hinteren Randbereich an die Kontur des Oberrandes 29 der Heckscheibe 21 angepaßt und legt sich bei geschlossenem Dach 2 dicht gegen den Oberrand 29 der Heckscheibe 21 oder ein Querbauteil der Karosserie an. Beim Öffnen des Daches 2 schwenken die beiden Dachteile kollisionsfrei über die Heckscheibe 21.

Grundsätzlich kann an dem vorderen Dachteil 4 wie auch an dem hinteren Dachteil 5 noch ein zusätzliches Dachteil fest angebracht oder daran bewegbar gelagert und in insbesondere synchroner Ablagebewegung mit dem zugehörigen Dachteil verstellt werden, wobei auch hier zweckmäßigerweise die Antriebsbewegung von der einen Antriebseinrichtung abgeleitet wird.

Durch die einfache Lagerung des vorderen Dachteiles 4 mittels fester Bauteile wie den beschriebenen Lagerarmen, d. h. ohne das vordere Dachteil 4 haltende kinematische Einrichtungen wie Viergelenke oder dergleichen, ist ein einfaches mehrteiliges Hardtop-Dach geschaffen, das ohne großen Steuerungsaufwand in gekoppelter oder simultaner Bewegung seiner Dachteile und in reiner Schwenkbewegung um die im wesentlichen fahrzeugfeste Schwenkachse 16 abgelegt werden kann.

### Bezugszeichenliste

- 1: Cabriolet
- 2: Dach
- 3: Ablageraum
- 4: vorderes Dachteil
- 5: hinteres Dachteil
- 6: Windschutzscheibe
- 7: Windlauf
- 8: A-Säule
- 9: Deckel
- 10: Lagereinrichtung
- 11: hintere Schwenkachse
- 12: Vorderrand
- 13: Lagerhebel
- 14: Lagerarm
- 15: Hauptlager
- 16: Schwenkachse
- 17: Lagereinrichtung
- 18: Vorderrand
- 19: Hinterrand
- 20: Hinterrand
- 21: Heckscheibe
- 22: Finne
- 23: Aufnahmeraum
- 24: Randbereich
- 25: Mittelabschnitt
- 26: Antriebseinrichtung
- 27: Antriebseinrichtung
- 28: Fahrzeugstruktur
- 29: Oberrand

## Patentansprüche

1. Fahrzeug mit einem umwandelbaren Dach (1), das ein vorderes Dachteil (4) und ein hinteres Dachteil (5) aufweist, die zwischen einer den Fahrzeuginnenraum überdeckenden Schließstellung und einer den Fahrzeuginnenraum freigebenden rückwärtigen Ablagestellung verstellbar sind, wobei das vordere Dachteil (4) an einem karosseriefesten Hauptlager (15) schwenkbar gelagert ist und
das hintere Dachteil (5) mittels einer Lagereinrichtung (17) am vorderen Dachteil (4) zwischen einer Schließstellung bei geschlossenem Dach (2) und einer Offenstellung, in der es über dem vorderen Dachteil (4) in gleichbombierter Stellung angeordnet ist, verstellbar gelagert ist,
**dadurch gekennzeichnet,**
**dass** das vordere Dachteil (4) derart an dem Hauptlager (15) schwenkbar gelagert ist, dass es um eine am Hauptlager (15) feststehende Schwenkachse (16) in seine Ablagestellung nach hinten umschwenkt, und
**dass** das hintere Dachteil (5) in Offenstellung beim Verschwenken des vorderen Dachteils (4) gemeinsam mit diesem in die rückwärtige Ablagestellung umschwenkt, in der die beiden Dachteile mit ihrer Oberseite nach unten weisend abgelegt sind.

2. Fahrzeug nach Anspruch 1,
**dadurch gekennzeichnet, daß** die Lagereinrichtung des hinteren Dachteils (5) eine Lenkereinrichtung (17), insbesondere ein Viergelenk, enthält.

3. Fahrzeug nach Anspruch 1 oder 2,
**dadurch gekennzeichnet, daß** das Hauptlager (15) an einem Fahrzeugseitenteil, an einer B-Säule oder an einem Überrollbügel insbesondere oberhalb der Gürtellinie des Fahrzeugs angeordnet ist.

4. Fahrzeug nach einem der Ansprüche 1 bis 3,
**dadurch gekennzeichnet, daß** der Schwenkwinkel des vorderen Dachteils (4) im Bereich von etwa 180° liegt.

5. Fahrzeug nach einem der Ansprüche 1 bis 4,
**dadurch gekennzeichnet, daß** das vordere Dachteil (4) zwei sich nach hinten zum jeweiligen Hauptlager (15) erstreckende seitliche Verlängerungen oder Lagerarme (14) aufweist und das hintere Dachteil (5) in Schließstellung die Verlängerungen oder Lagerarme (14) überdeckt.

6. Fahrzeug nach einem der Ansprüche 1 bis 5,
**dadurch gekennzeichnet, daß** eine Antriebseinrichtung zum Verschwenken des vorderen Dachteils (4) vorgesehen ist und daß das hintere Dachteil (5) mit dieser Antriebseinrichtung gekoppelt ist oder eine eigene Antriebseinrichtung aufweist.

7. Fahrzeug nach einem der Ansprüche 1 bis 6,
**dadurch gekennzeichnet, daß** die Antriebseinrichtung zum Verstellen des vorderen Dachteils (4) einen Hydraulikzylinder oder einen Elektromotor aufweist.

8. Fahrzeug nach Anspruch 7,
**dadurch gekennzeichnet, daß** der Hydraulikzylinder (27) unmittelbar oder über ein Zwischengetriebe mit der Lagereinrichtung des vorderen Dachteils (4) verbunden ist.

9. Fahrzeug nach einem der Ansprüche 1 bis 8,
**dadurch gekennzeichnet, daß** die beiden Dachteile (4, 5) feste Dachschalen aufweisen.

10. Fahrzeug nach einem der Ansprüche 1 bis 9,
**dadurch gekennzeichnet, daß** ein Deckel (9) des Ablageraums (3) im Bereich seines Hinterrandes am Fahrzeug schwenkbar gelagert ist und vor dem Verschwenken der Dachteile (4, 5) mit seinem Vorderrand (8) in eine Öffnungsstellung hochschwenkbar ist.

11. Fahrzeug nach Anspruch 10,
**dadurch gekennzeichnet, daß** der Deckel (9) des Ablageraums (3) seitlich jeweils eine nach oben ragende Finne (22) aufweist, die einen nach unten offenen Aufnahmeraum (23) für einen Randbereich (24) des vorderen Dachteils (4) bildet.

12. Fahrzeug nach einem der Ansprüche 1 bis 11,
**dadurch gekennzeichnet, daß** das Fahrzeug eine insbesondere vertikal ausgerichtete Heckscheibe (21) aufweist, an die das hintere Dachteil (5) bei geschlossenem Dach (2) angrenzt und die unterhalb des Schwenkweges der beiden Dachteile (4, 5) angeordnet ist.

13. Fahrzeug nach Anspruch 12,
**dadurch gekennzeichnet, daß** die Heckscheibe (21) am Fahrzeug vertikal verstellbar gelagert ist.

14. Fahrzeug nach einem der Ansprüche 1 bis 13,
**dadurch gekennzeichnet, daß** bei geschlossenem Dach (2) das hintere Dachteil (5) an seinem jeweiligen Seitenrand an eine seitliche Fahrzeugstruktur angrenzt.

## Claims

1. Vehicle with a convertible roof (1), which has a front roof part (4) and a rear roof part (5), which are movable between a closed position covering the vehicle interior and a rearward lowered position exposing the vehicle interior, wherein the front roof part (4) is pivotally mounted on a main bearing (15) fixed with respect to the body, and the rear roof part (5) is mounted on the front roof part (4) by means of a bearing device (17) in such a way as to be movable between a closed position when the roof (2) is closed and an open position, in which the said rear roof part (5) is arranged above the front roof part (4) in an identically cambered position, **characterized in that** the front roof part (4) is pivotally mounted on the main bearing (15) in such a way that it pivots rearwards into its lowered position about a pivot (16) which is fixed on the main bearing (15), and that, in the open position, when the front roof part (4) pivots, the rear roof part (5) pivots jointly therewith into the rearward lowered position, in which the two roof parts are laid down with their upper side facing downwards.

2. Vehicle according to Claim 1, **characterized in that** the bearing device of the rear roof part (5) comprises a link arrangement (17), in particular a four-bar linkage.

3. Vehicle according to Claim 1 or 2,
**characterized in that** the main bearing (15) is arranged on a vehicle side part, on a B pillar or on a rollover bar, in particular above the belt line of the vehicle.

4. Vehicle according to one of Claims 1 to 3, **characterized in that** the pivoting angle of the front roof part (4) is in a range of about 180°.

5. Vehicle according to one of Claims 1 to 4, **characterized in that** the front roof part (4) has two lateral extensions or bearing arms (14), which extend rearwards to the respective main bearing (15), and the rear roof part (5) covers the extensions or bearing arms (14) in the closed position.

6. Vehicle according to one of Claims 1 to 5, **characterized in that** a driving device is provided for pivoting the front roof part (4), and **in that** the rear roof part (5) is coupled to this driving device or has its own driving device.

7. Vehicle according to one of Claims 1 to 6, **characterized in that** the driving device for moving the front roof part (4) has a hydraulic cylinder or an electric motor.

8. Vehicle according to Claim 7, **characterized in that** the hydraulic cylinder (27) is connected directly or via an intermediate mechanism to the bearing device of the front roof part (4).

9. Vehicle according to one of Claims 1 to 8, **characterized in that** the two roof parts (4, 5) have fixed roof shells.

10. Vehicle according to one of Claims 1 to 9, **characterized in that** a cover (9) of the deposition space (3) is pivotally mounted on the vehicle in the region of its rear edge, and can be pivoted up by its front edge (8) into an open position before the roof parts (4, 5) are pivoted.

11. Vehicle according to Claim 10, **characterized in that** the cover (9) of the deposition space (3) has an upward-projecting fin (22) on each side, which fin forms a downwardly open accommodation space (23) for an edge region (24) of the front roof part (4).

12. Vehicle according to one of Claims 1 to 11, **characterized in that** the vehicle has a rear window (21), in particular a vertically aligned rear window, which is adjoined by the rear roof part (5) when the roof (2) is closed and which is arranged below the pivoting path of the two roof parts (4, 5).

13. Vehicle according to Claim 12, **characterized in that** the rear window (21) is mounted on the vehicle in such a way as to be vertically movable.

14. Vehicle according to one of Claims 1 to 13, **characterized in that** each of the lateral edges of the rear roof part (5) adjoins a lateral structure of the vehicle when the roof (2) is closed.

## Revendications

1. Véhicule comprenant un toit convertible (1), qui présente une partie de toit avant (4) et une partie de toit arrière (5) qui peuvent être déplacées entre une position de fermeture recouvrant l'habitacle du véhicule et une position de rangement arrière libérant l'habitacle du véhicule, la partie de toit avant (4) étant montée de manière pivotante à un palier principal (15) fixé à la carrosserie, et
la partie de toit arrière (5) étant montée de manière déplaçable au moyen d'un dispositif de palier (17) sur la partie de toit avant (4) entre une position de fermeture lorsque le toit (2) est fermé et une position d'ouverture dans laquelle elle est disposée dans une position bombée dans le même sens par-dessus la partie de toit avant (4),
**caractérisé en ce que**
la partie de toit avant (4) est montée de manière pivotante sur le palier principal (15) de telle sorte qu'elle pivote vers l'arrière autour d'un axe de pivotement (16) fixe sur le palier principal (15), dans sa position de rangement, et **en ce que** la partie de toit arrière (5), dans la position ouverte, lors du pivotement de la partie de toit avant (4), pivote conjointement avec celle-ci dans la position de rangement arrière, dans laquelle les deux parties de toit sont rangées avec leur côté supérieur tourné vers le bas.

2. Véhicule selon la revendication 1,
**caractérisé en ce que** le dispositif de palier de la partie de toit arrière (5) contient un dispositif à bras oscillants (17), notamment un quadrilatère articulé.

3. Véhicule selon la revendication 1 ou 2, **caractérisé en ce que** le palier principal (15) est disposé sur une partie latérale du véhicule, sur une colonne B ou sur un arceau de sécurité, notamment au-dessus de la ligne de ceinture du véhicule.

4. Véhicule selon l'une quelconque des revendications 1 à 3,
**caractérisé en ce que** l'angle de pivotement de la partie de toit avant (4) est de l'ordre d'environ 180°.

5. Véhicule selon l'une quelconque des revendications 1 à 4, **caractérisé en ce que** la partie de toit avant (4) présente deux prolongements latéraux ou bras de support (14) s'étendant vers l'arrière jusqu'au palier principal respectif (15), et la partie de toit arrière (5) recouvre dans la position de fermeture les prolongements ou les bras de support (14).

6. Véhicule selon l'une quelconque des revendications 1 à 5, **caractérisé en ce qu'**un dispositif d'entraînement pour faire pivoter la partie de toit avant (4) est prévu et **en ce que** la partie de toit arrière (5) est accouplée à ce dispositif d'entraînement ou présente son propre dispositif d'entraînement.

7. Véhicule selon l'une quelconque des revendications 1 à 6, **caractérisé en ce que** le dispositif d'entraînement pour déplacer la partie de toit avant (4) présente un cylindre hydraulique ou un moteur électrique.

8. Véhicule selon la revendication 7,
**caractérisé en ce que** le cylindre hydraulique (27) est connecté directement ou par le biais d'une transmission intermédiaire au dispositif de palier de la partie de toit avant (4).

9. Véhicule selon l'une quelconque des revendications 1 à 8,
**caractérisé en ce que** les deux parties de toit (4, 5) présentent des coques de toit fixes.

10. Véhicule selon l'une quelconque des revendications 1 à 9,
**caractérisé en ce qu'**un couvercle (9) de l'espace de rangement (3) est monté de manière pivotante dans la région de son bord arrière sur le véhicule, et peut pivoter vers le haut avec son bord avant (8) dans une position d'ouverture avant le pivotement des parties de toit (4, 5).

11. Véhicule selon la revendication 10,
**caractérisé en ce que** le couvercle (9) de l'espace de rangement (3) présente latéralement à chaque fois un aileron (22) saillant vers le haut, qui forme un espace de réception (23) ouvert vers le bas pour une région de bord (24) de la partie de toit avant (4).

12. Véhicule selon l'une quelconque des revendications 1 à 11,
**caractérisé en ce que** le véhicule présente une vitre arrière (21) orientée essentiellement verticalement, à laquelle se rattache la partie de toit arrière (5) lorsque le toit (2) est fermé, et qui est disposée en dessous de la course de pivotement des deux parties de toit (4, 5).

13. Véhicule selon la revendication 12,
**caractérisé en ce que** la vitre arrière (21) est montée de manière déplaçable verticalement sur le véhicule.

14. Véhicule selon l'une quelconque des revendications 1 à 13,
**caractérisé en ce que** lorsque le toit (2) est fermé, la partie de toit arrière (5) est adjacente au niveau de son bord latéral respectif à une structure latérale du véhicule.
